# EUROPÄISCHE PATENTANMELDUNG

(11) **EP 4 242 758 A1**
(43) Veröffentlichungstag der Anmeldung: **13.09.2023**
(21) Anmeldenummer: 22161385.4
(22) Anmeldetag: 10.03.2022
(51) Int. Cl.: G05B 19/042

(54) **GATEWAY UND VERFAHREN ZUR INBETRIEBNAHME EINES GATEWAYS**

(71) Anmelder: VEGA Grieshaber KG, 77709 Wolfach (DE)
(72) Erfinder: Staiger, Holger, 78739 Hardt (DE); Müller, Tobias, 78730 Lauterbach (DE); Hummel, Jakob, 79215 Elzach (DE); Seckinger, Timo, 78733 Aichhalden (DE)
(74) Vertreter: Patentanwälte Bauer Vorberg Kayser

(57) **Zusammenfassung**

Die Erfindung betrifft ein Gateway mit einer ersten Kommunikationsschnittstelle (16) zur Kommunikation mit einer übergeordneten Einheit (12) und mit einer zweiten Kommunikationsschnittstelle (20) zur Kommunikation mit mindestens einem Feldgerät (14).

Die Inbetriebnahme des Gateways (10) soll besonders einfach realisierbar sein. Dazu ist das Gateway (10) dazu eingerichtet, das mindestens eine Feldgerät (14) in Folge eines Auslöseereignisses automatisch zu erkennen und im Gateway (10) zu parametrieren.

Ferner betrifft die Erfindung Verfahren zur Inbetriebnahme eines Gateways (10) und ein Computerprogrammprodukt.

## Beschreibung

Die Erfindung betrifft ein Gateway zur Kommunikation mit mindestens einem Feldgerät gemäß Patentanspruch 1. Die Erfindung betrifft ferner ein Verfahren zur Inbetriebnahme eines Gateways gemäß Patentanspruch 11 und ein Computerprogrammprodukt gemäß Patentanspruch 17.

Gateways oder auch Übertragungseinheiten sind aus dem Stand der Technik hinlänglich bekannt und werden insbesondere zur Realisierung einer Kommunikation zwischen Feldgeräten und übergeordneten Einheiten verwendet.

In der Prozessautomatisierungstechnik oder auch der Fabrik- und/oder Logistikautomatisierung werden vielfach Feldgeräte eingesetzt, die zur Erfassung und/oder Beeinflussung von Prozessvariablen dienen. Unter dem Begriff Feldgerät werden dabei verschiedene technische Einrichtungen subsummiert, die mit einem Produktionsprozess in direkter Beziehung stehen. "Feld" bezeichnet dabei den Bereich außerhalb von Leitwarten. Beispiele für derartige Feldgeräte sind Füllstandmessgeräte, Grenzstandmessgeräte und Druckmessgeräte mit Sensoren, die die entsprechenden Prozessvariablen Füllstand, Grenzstand oder Druck erfassen. Häufig sind solche Feldgeräte mit übergeordneten Einheiten, z. B. Leitsystemen oder Steuereinheiten, verbunden. Diese übergeordneten Einheiten dienen zur Prozesssteuerung, Prozessvisualisierung und/oder Prozessüberwachung.

Feldgeräte können eine kabelgebundene Energieversorgung aufweisen und drahtgebunden und/oder drahtlos kommunizieren. Alternativ dazu kann es sich um ein autarkes Feldgerät handeln, welches seinen Energiebedarf weitgehend oder vollumfänglich aus einem im Gerät integrierten Energiespeicher, beispielsweise einer Batterie, abdeckt und zudem drahtlos kommuniziert.

Ebenso kann es sich bei dem Gateway um ein Gateway mit kabelgebundener Energieversorgung und/oder Kommunikation handeln oder aber um ein autarkes Gateway.

Bislang wird die Inbetriebnahme eines Gateways in der Regel so vorgenommen, dass kundenseitig die zu verbindenden Feldgeräte in komplizierter Weise einzeln dem Gateway hinzugefügt und dort konfiguriert werden.

Die zugrundeliegende Aufgabe der Erfindung ist es, ein Gateway, ein Verfahren zur Inbetriebnahme eines Gateways und ein Computerprogrammprodukt zur Verfügung zu stellen, mittels welchen eine Inbetriebnahme eines Gateways besonders einfach realisierbar ist.

Die Lösung der Aufgabe erfolgt erfindungsgemäß mit den Merkmalen der unabhängigen Ansprüche. Weitere Vorteile und praktische Ausführungsformen sind in Verbindung mit den abhängigen Ansprüchen beschrieben.

Ein erfindungsgemäßes Gateway weist eine ersten Kommunikationsschnittstelle zur Kommunikation mit einer übergeordneten Einheit und eine zweiten Kommunikationsschnittstelle zur Kommunikation mit mindestens einem Feldgerät auf.

Ein Gateway ist dabei eine Komponente, die eine Verbindung zwischen zwei Kommunikationspartnern (hier zwischen mindestens einem Feldgerät und einer übergeordneten Einheit) herstellt. Ein Gateway kann dabei die empfangenen Daten derart verändern, dass diese zur Weiterleitung in ihrer Adressierung bearbeitet werden und/oder dass auch das Übertragungsprotokoll insgesamt geändert wird (z.B. von HART zur IO-Link). Ein Gateway kann auch als Übertragungseinheit bezeichnet werden.

Bei dem mindestens einen Feldgerät handelt es sich insbesondere um einen Füllstandsensor, einen Grenzstandsensor und/oder einen Drucksensor.

Die übergeordnete Einheit ist insbesondere ein Leitsystem oder eine Steuereinheit. Insbesondere ist die übergeordnete Einheit Teil einer Cloud, auf welche von unterschiedlichen Geräten und Standorten zugegriffen werden kann.

Mittels des Gateways können Messwerte, Ereignismeldungen und Diagnoseinformationen von dem Feldgerät an die übergeordnete Einheit übermittelt werden. Steuerbefehle und Anpassungen von Parametern können von der übergeordneten Einheit via das Gateway an ein korrespondierendes Feldgerät übertragen werden.

Das Gateway ist erfindungsgemäß dazu eingerichtet, das mindestens eine Feldgerät in Folge eines Auslöseereignisses automatisch zu erkennen und im Gateway zu parametrieren. Wie im Folgenden noch beschrieben, werden durch ein von einem Anwender ausgelösten Auslöseereignisses die mit dem Gateway verbundenen Feldgeräte gesucht und automatisch erkannt und insbesondere in einer Software zum Betreiben des Gateways für den Anwender erkenntlich angezeigt. Zudem wird das Feldgerät im Gateway automatisch parametriert. Parametriert heißt hier insbesondere, dass ein aufgefundenes Feldgerät einer virtuellen Messstelle in der Software zugeordnet wird, dem Feldgerät eine Bezeichnung zugeteilt wird und/oder festgelegt wird, welcher Messwert von dem Feldgerät abgerufen wird. Die zugeordnete Bezeichnung des Feldgerätes im Gateway und auch die abgerufenen Messwerte sind insbesondere standardmäßig vorab im Gateway festgelegt.

Der Vorteil dieser durch ein Auslöseereignis erfolgenden automatischen Erkennung von Feldgeräten und deren Parametrierung im Gateway ist, dass der Anwender keine Kenntnisse über die Funktionsweise des Gateways benötigt. Die Inbetriebnahme des Gateways und der Feldgeräte beschränkt sich auf die Montage und gegebenenfalls auf die Verkabelung der Hardwarekomponenten. Eine vorher notwendige manuelle Suche der Feldgeräte und händische Zuordnung der Feldgeräte zu einzelnen Messstellen sowie Benennung und Messwertfestlegung ist nicht mehr erforderlich. Die Inbetriebnahme des Gateways und damit verbundener Feldgeräte kann nunmehr besonders einfach und schnell erfolgen.

In einer praktischen Ausführungsform des erfindungsgemäßen Gateways, weist das Gateway für das Auslöseereignis mindestens ein Auslöseelement auf, wobei mittels des Auslöseelementes eine automatische Erkennung des mindestens einen Feldgerätes und eine Parametrierung im Gateway auslösbar ist.

Vorzugsweise handelt es sich bei dem Auslöseelement um eine Taste am Gehäuse des Gateways. Eine Taste direkt am Gateway stellt eine besonders einfache Möglichkeit für den Anwender dar, das Gateway erstmalig in Betrieb zu nehmen und zu konfigurieren. Per einfachem Knopfdruck kann der Anwender ausgewählte, in einem Netzwerk mit dem Gateway befindliche Feldgerät hinzufügen und eine automatische Parametrierung dieser Feldgeräte im Gateway ermöglichen.

Alternativ oder in Ergänzung dazu, kann es sich bei dem Auslöseelement um ein Softwareelement, insbesondere eine virtuelle Schaltfläche handeln. Zum Beispiel kann auf einem mit dem Gateway verbundenen Gerät, wie einem mobilen Endgerät oder einem Computer eine entsprechende Schalfläche in einer App bzw. Software vorgesehen sein, die durch Anklicken die Erkennung des mindestens einen Feldgeräts und dessen Parametrierung im Gateway auslöst.

Alternativ kann die Betätigung der Taste softwareseitig so ausgewertet werden, dass das Softwareelement aktiviert und so die Erkennung des mindestens eine Feldgeräts und dessen Parametrierung ausgelöst wird.

In einer weiteren praktischen Ausführungsform des Gateways, ist dieses dazu eingerichtet, automatisch ein Zeitintervall festzulegen, nach welchem jeweils Messwerte von dem Feldgerät abgerufen werden sollen. Insbesondere werden die Messwerte jedoch im angeschalteten Zustand des Gateways kontinuierlich von dem mindestens einen Feldgerät abgerufen. Das Gateway kann alternativ oder ergänzend dazu auch dazu ausgelegt sein, ein Zeitintervall festzulegen, nach welchem jeweils Messwerte an die übergeordnete Einheit versendet werden. Die beiden vorstehend genannten Zeitintervalle für den Abruf und die Übertragung der Messwerte können voneinander abweichen, das Gateway weist dann insbesondere einen Speicher auf, in welchem die Messwerte von dem Feldgerät gespeichert bzw. gesammelt werden und dann als Paket an die übergeordnete Einheit übertragen werden.

Das Gateway weist insbesondere eine Energieversorgung auf, wobei das Gateway dazu eingerichtet ist, in Abhängigkeit einer Art der Energieversorgung das Zeitintervall für die Übertragung des Messwertes an die übergeordnete Einheit zu konfigurieren. Handelt es sich um ein autarkes Gateway, welches nicht kabelgebunden, sondern über einen Energiespeicher mit Energie versorgt wird, so wird ein Energiesparmodus konfiguriert. Das Gateway ist dann immer nur für eine kurze Zeit eingeschaltet, wobei in dieser Zeit die Abfrage eines Messwertes vom jeweiligen Feldgerät und die Übermittlung des Messwertes an die übergeordnete Einheit erfolgt. Das jeweilige Einschalten des Gateways erfolgt dann nach dem festgelegten Zeitintervall. Das Zeitintervall zum Abfragen und Versenden der Messwerte an die übergeordnete Einheit ist im Energiesparmodus vergleichsweise lang. Durch das intervallartige, kurze Anschalten des Gateways und damit auch einer seltenen Abfrage und Übermittlung des Messwertes wird das Gateway besonders energiesparend betrieben.

Ist das Gateway an das Stromnetz angeschlossen, so wird ein Dauerbetriebmodus konfiguriert. Im Dauerbetriebmodus ist das Gateway ständig angeschaltet und es werden insbesondere kontinuierlich Messwerte von dem mindestens einen Feldgerät an die übergeordnete Einheit übermittelt. Lediglich das Übermitteln der Messwerte an die übergeordnete Einheit erfolgt nach dem festgelegten Zeitintervall. Das Zeitintervall zum Übermitteln der Messwerte ist im Dauerbetriebmodus insbesondere kleiner als im Energiesparmodus.

Insbesondere ist das Gateway dazu eingerichtet, eine Änderung eines aktuellen Messwertes von einem vorherigen Messwert zu ermitteln und bei Überschreiten einer festgelegten maximalen Änderung eine Übertragung des aktuellen Messwertes an die übergeordnete Einheit zu veranlassen. Vorzugsweise wird dieses änderungsbasierte Versenden der Messwerte dann angewendet, wenn das Gateway an das Stromnetz angeschlossen und der Dauerbetriebmodus eingestellt ist und genug Energie bereitsteht, um Messwerte auch bei Überschreiten einer maximalen Änderung zu versenden.

Das Gateway kommuniziert insbesondere über das HART Protokoll mit dem mindestens einen Feldgerät. Das Erkennen des mindestens einen Feldgerätes erfolgt dabei insbesondere durch Durchsuchen eines vorgegebenen Adressraums von HART-Adressen. Es sind auch alternative Kommunikationsverbindungen, wie zum Beispiel Foundation Fieldbus oder Profibus denkbar. Die Feldgeräte sind insbesondere über den bekannten 4 bis 20 mA Standard mit dem Gateway verbunden.

In einer weiteren praktischen Ausführungsform des Gateways ist die übergeordnete Einheit mit dem Gateway über ein Funknetz verbunden. Die Übertragung der Messwerte, Ereignismeldungen und Diagnoseinformationen an die übergeordnete Einheit erfolgt insbesondere über das GSM, GPRS, UMTS und/oder LTE-Netz. Bei Verwendung aller vorstehenden Netze, ist durch die Multi-Band-Technologie eine nahezu weltweite Verwendung des Gateways möglich. Ebenso bietet sich die Möglichkeit, per Fernparametrierung via das Gateway auf die angeschlossenen Feldgerät zuzugreifen. Änderungen am Gateway können ebenfalls über das Funknetz erfolgen.

Ferner kann das Gateway neben der Funkantenne zur Kommunikation mittels GSM, GPRS, UMTS und/oder LTE auch zur Herstellung einer Nahfeld-Kommunikation, wie beispielsweise zur Herstellung einer Verbindung über ZigBee, ZWave, Bluetooth, Bluetooth LE und W-LAN ausgebildet sein. Zusätzlich kann das Gateway den Empfang von Positionsdaten, bspw. via GPS ermöglichen.

Weiterhin kann das Gateway eine optische Anzeige zur Visualisierung des Betriebszustandes aufweisen. Als optische Anzeige dienen insbesondere mehrere LEDs. Die LEDs können insbesondere über unterschiedliche Farbkombinationen oder durch Blinken anzeigen, ob das Gateway z.B. gerade betriebsbereit ist oder ob gerade eine Inbetriebnahme umfassend das Erkennen von Feldgeräten und Parametrieren von Feldgeräten im Gateway erfolgt oder ob eine Störung vorliegt.

Die Erfindung betrifft auch ein Verfahren zur Inbetriebnahme eines Gateways, insbesondere eines wie vorstehend beschriebenen Gateways, wobei das Gateway der Kommunikation zwischen mindestens einem Feldgerät und einer übergeordneten Einheit dient. Durch ein Auslöseereignis erfolgt eine automatische Erkennung mindestens eines Feldgerätes und eine anschließende Parametrierung des Feldgerätes im Gateway. Wie vorstehend bereits beschrieben, kann mittels eines einfachen Auslöseereignisses eine praktische und schnelle Inbetriebnahme des Gateways erfolgen, sodass für den Anwender keine weiteren manuellen Einstellungen in dem Gateway erforderlich werden.

Bei dem Auslöseereignis handelt es sich insbesondere um eine Aktivierung eines Auslöseelementes. Hierbei kann durch Drücken einer Taste am Gehäuse des Gateways das automatische Erkennen der Feldgeräte und die Parametrierung der Feldgeräte im Gateway erfolgen. Alternativ oder in Ergänzung dazu kann durch die Betätigung einer virtuellen Schaltfläche die Inbetriebnahme ausgelöst werden. Sowohl das Drücken einer Taste als auch das Betätigen einer entsprechend bezeichneten virtuellen Schaltfläche stellen Möglichkeiten dar, die es einem Anwender erlauben, das Gateway besonders einfach in Betrieb zu nehmen.

Insbesondere wird zur Erkennung der vorhandenen Feldgeräte nach HART-Adressen in einem vorgegebenen Adressbereich gesucht. Die HART-Adressen sind den einzelnen Feldgeräten insbesondere bei Auslieferung bereits zugeordnet und befinden sich in dem festgelegten Adressbereich. Beispielsweise kann das Gateway Messstellen für maximal 15 verschiedenen Feldgeräten aufweisen und die zu verbindenden Feldgeräte weisen jeweils eine Adresse im Adressraum zwischen 1 und 15 auf. Die erkannten Feldgeräte werden dann jeweils einer der 15 Messstellen zugeordnet.

Nach dem Erkennen der Feldgeräte und ihrer Parametrierung im Gateway wird insbesondere konfiguriert, nach welchem Zeitintervall jeweils eine Abfrage eines Messwertes von dem Feldgerät und/oder eine Weiterleitung eines Messwertes an die übergeordnete Einheit erfolgen soll. Wie vorstehend bereits beschrieben, erfolgt die Weiterleitung insbesondere in Abhängigkeit der Art der Energieversorgung. Wird ein Energiespeicher erkannt, so wird insbesondere ein Energiesparmodus eingestellt und falls eine kabelbasierte Stromversorgung erkannt wird, so wird ein Dauerbetriebmodus eingestellt, welcher eine häufigere Übermittlung von Messwerten ermöglicht.

Alternativ oder in Ergänzung dazu, erfolgt die Weiterleitung des Messwertes an die übergeordnete Einheit in Abhängigkeit einer Messwertänderung. Steigt ein Messwert sprunghaft an oder nimmt ein Messwert sprunghaft ab, so wird eine sofortige Übertragung der Messwerte an die übergeordnete Einheit veranlasst.

Für die vollständige Inbetriebnahme des Gateways wird insbesondere auch eine Testnachricht an die übergeordnete Einheit versendet, um sicherzustellen, dass der Messwertversand funktioniert.

Die Erfindung betrifft ferner ein Computerprogrammprodukt, das wenn es auf einem Prozessor ausgeführt wird, diesen dazu veranlasst ein Gateway gemäß einem wie vorstehend beschriebenen Verfahren anzusteuern.

Weitere praktische Ausführungsformen und Vorteile sind nachfolgend in Verbindung mit den Zeichnungen beschrieben. Es zeigen:
- Fig. 1: ein System aus einem Gateway und einer übergeordneten Einheit und mehreren Feldgeräten in einer schematischen Darstellung, und
- Fig. 2: ein Ablaufdiagramm zur Inbetriebnahme eines Gateways.

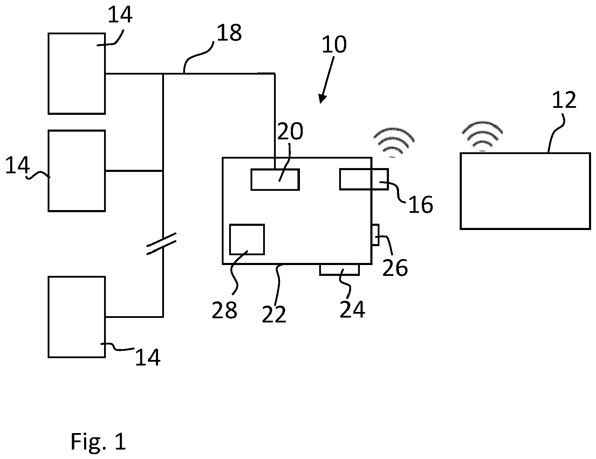

In Fig. 1 ist ein System aus einem Gateway 10, einer übergeordneten Einheit 12 und mehreren Feldgeräten 14 dargestellt.

Das Gateway 10 weist eine erste Kommunikationsschnittstelle 16 zur Verbindung mit der übergeordneten Einheit 12 auf. Die Verbindung mit der übergeordneten Einheit 12 erfolgt drahtlos über das Mobilfunknetz. Zudem kann die erste Kommunikationsschnittstelle 16 auch per Bluetooth angesteuert werden.

Ferner ist das Gateway 10 ist über eine zweite Kommunikationsschnittstelle 20 über einen Bus 18 nach dem HART-Protokoll mit vorliegend drei Feldgeräten 14 verbunden. Die Verbindung kann kabelgebunden oder kabellos ausgestaltet sein. Wie durch die unterbrochene Linie angedeutet, kann das Gateway 10 auch mit mehr als drei Feldgeräten 14 verbunden sein. Bei den Feldgeräten 14 handelt es sich um einen Füllstandsensor, Grenzstandsensor oder Drucksensor.

Ferner weist das Gateway 10 ein Gehäuse 22 mit einer Taste 24 und einer LED 26 auf. Es handelt sich hier um ein autarkes Gateway 10 mit einem Energiespeicher 28.

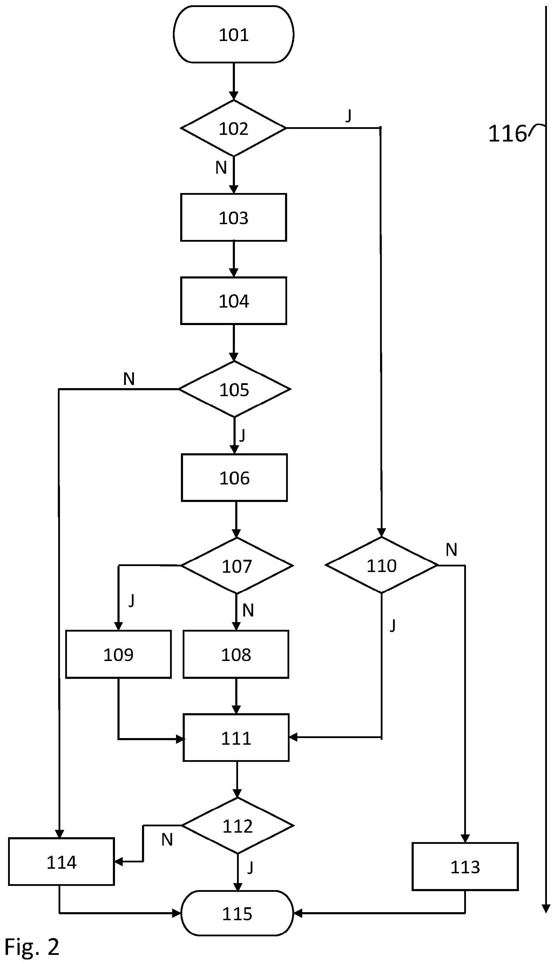

In Verbindung mit Fig. 2 wird im Folgenden die Inbetriebnahme des Gateways 10 erläutert. Dazu wird in Schritt 101 durch das Auslöseereignis die Inbetriebnahme begonnen. Das Auslöseereignis kann entweder das Drücken der Taste 24 am Gehäuse 22 des Gateways 10 oder das Anklicken eines entsprechendes Bedienfeldes in einer Software oder App sein.

In Schritt 102 wird dann abgefragt, ob bereits eine Einrichtung des Gateways 10 stattgefunden hat, um zu verhindern, dass eine bereits erfolgte Inbetriebnahme des Gateways 10 überschrieben wird. Wird festgestellt, dass das Gateway 10 bereits in Betrieb genommen wurde (J), so fährt das Verfahren mit Schritt 110 fort. In Schritt 110 wird abgefragt, ob die bereits erfolgt Inbetriebnahme durch ein Auslöseereignis (Drücken einer Taste) veranlasst wurde. Falls ja (J), wird das Verfahren in Schritt 111 mit einem Testversand fortgesetzt. Falls nein (N) wird in Schritt 113 ein Fehler anzeigt. Dies ist hier über eine blinkende LED am Gateway 10 realisiert.

Wird bei der Abfrage in Schritt 102 festgestellt, dass bislang keine Inbetriebnahme des Gateways 10 erfolgt ist (N), so werden in Schritt 103 vorsichtshalber alle Zuordnungen zu den Messtellen gelöscht. In Schritt 104 erfolgt dann die automatische Suche nach mit dem Gateway 10 verbundenen Feldgeräten 14. Dabei wird ein definierter Adressraum nach korrespondierenden HART-Adressen durchsucht.

Wird in Schritt 105 festgestellt, dass keine Feldgeräte 14 vorhanden sind (N), so wird das Verfahren mit Schritt 114 fortgesetzt, wobei ein Fehler ausgegeben wird, der in Form einer blinkenden LED 26 angezeigt wird.

Wurde in Schritt 105 mindestens ein Feldgerät 14 erkannt, so wird dieses im folgenden Schritt 106 im Gateway 10 parametriert. Das heißt, die jeweiligen Feldgeräte 14 werden bestimmten virtuellen Messstellen zugeordnet, den Feldgeräten 14 werden Bezeichnungen zugeordnet und es wird eingestellt, welcher Messwert von dem jeweiligen Feldgerät 14 abgerufen werden soll. Wurden Feldgeräte 14 erkannt, die zum selben Hersteller wie das Gateway 10 gehören, so werden vorkonfigurierte Messwerte abgerufen, ansonsten werden sogenannte primary values abgerufen, die von jedem beliebigen Feldgerät 14 bereitgestellt werden.

In Schritt 107 wird dann die Art der Energieversorgung abgefragt. Wird in Schritt 107 festgestellt, dass kein Energiespeicher 28 vorhanden ist (N), sondern das Gateway 10 über eine netzbasierte Stromversorgung verfügt, so wird ein Dauerbetriebsmodus am Gateway 10 eingestellt (Schritt 108). In dem Dauerbetriebmodus ist das Gateway 10 permanent angeschaltet und es werden kontinuierlich Messwerte von den Feldgeräten 14 an das Gateway 10 übertagen. Die Übermittlung der Messwerte von dem Gateway 10 an die übergeordnete Einheit 12 erfolgt nach einem ersten Zeitintervall. Zudem wird ein Messwert an die übergeordnete Einheit 12 versendet, wenn eine Messwertänderung des aktuellen Messwert gegenüber dem vorherigen Messwert zu groß ist. Beispielweise wird bei einer Messwertänderung von mindestens 3% eine Übermittlung der Messwerte an die übergeordnete Einheit 12 gestartet.

Wird in Schritt 107 festgestellt, dass ein Energiespeicher 28 vorhanden ist (J) und es sich um ein autarkes Gateway 10 handelt, so wird in Schritt 109 ein Energiesparmodus am Gateway 10 eingestellt. Im Energiesparmodus wird ein zweites Zeitintervall eingestellt, nach welchem sich das Gateway 10 jeweils kurz einschaltet, einen Messwert von den Feldgeräten 14 abfragt und diesen an die übergeordnete Einheit 10 versendet. Das zweite Zeitintervall, nach welchem jeweils ein Messergebnis der jeweiligen Feldgeräte 14 an die übergeordnete Einheit 10 gesendet wird ist länger ist als das erste Zeitintervall im Dauerbetriebmodus. Entsprechend werden die Messwerte seltener an die übergeordnete Einheit 10 versendet als im Dauerbetriebmodus.

Nach dem Festlegen des Zeitintervalls erfolgt in Schritt 111 das Versenden einer Testnachricht von dem Gateway 10 an die übergeordnete Einheit 12. Wird in Schritt 112 festgestellt, dass das Versenden der Testnachricht nicht erfolgreich war (N), so wird in Schritt 114 ein Fehler ausgegeben. Was das Versenden der Testnachricht erfolgreich (J), so endet die Inbetriebnahme in Schritt 115.

Während der gesamten Inbetriebnahme des Gateways 10 wird dies durch Blinken mindestens einer LED 26 angezeigt (Schritt 116).

### Bezugszeichenliste

- 10: Gateway
- 12: übergeordnete Einheit
- 14: Feldgerät
- 16: erste Kommunikationsschnittstelle
- 18: Bus
- 20: zweite Kommunikationsschnittstelle
- 22: Gehäuse
- 24: Auslöseelement, Taste
- 26: LED
- 28: Energiespeicher

## Patentansprüche

1. Gateway mit einer ersten Kommunikationsschnittstelle (16) zur Kommunikation mit einer übergeordneten Einheit (12) und mit einer zweiten Kommunikationsschnittstelle (20) zur Kommunikation mit mindestens einem Feldgerät (14),
**dadurch gekennzeichnet, dass**
das Gateway (10) dazu eingerichtet ist, das mindestens eine Feldgerät (14) in Folge eines Auslöseereignisses automatisch zu erkennen und im Gateway (10) zu parametrieren.

2. Gateway nach dem vorstehenden Anspruch,
**dadurch gekennzeichnet, dass**
das Gateway (10) für das Auslöseereignis mindestens ein Auslöseelement aufweist, mittels welchem eine automatische Erkennung mindestens eines Feldgerätes (14) und eine Parametrierung des mindestens einen Feldgerätes (14) im Gateway (10) veranlasst wird.

3. Gateway nach dem vorstehenden Anspruch,
**dadurch gekennzeichnet, dass**
es sich bei dem Auslöseelement um eine Taste (24) am Gehäuse (22) des Gateways (10) handelt.

4. Gateway nach einem der beiden vorstehenden Ansprüche,
**dadurch gekennzeichnet, dass**
es sich bei dem Auslöseelement um eine virtuelle Schaltfläche handelt.

5. Gateway nach einem der vorstehenden Ansprüche,
**dadurch gekennzeichnet, dass**
das Gateway (10) dazu eingerichtet ist, automatisch ein Zeitintervall festzulegen, nach welchem jeweils Messwerte von dem Feldgerät (14) abgerufen und/oder und an die übergeordnete Einheit (10) übertragen werden.

6. Gateway nach einem der vorstehenden Ansprüche,
**dadurch gekennzeichnet, dass**
das Gateway (10) eine Energieversorgung aufweist und dazu eingerichtet ist, in Abhängigkeit einer Art der Energieversorgung ein Zeitintervall für die Übertragung des Messwertes an die übergeordnete Einheit (10) zu konfigurieren.

7. Gateway nach einem der vorstehenden Ansprüche,
**dadurch gekennzeichnet, dass** ,
das Gateway (10) dazu eingerichtet ist, eine Änderung eines aktuellen Messwertes gegenüber einem vorherigen Messwert zu ermitteln und bei Überschreiten einer festgelegten maximalen Änderung, eine Übertragung der Messwerte an die übergeordnete Einheit (10) zu veranlassen.

8. Gateway nach einem der vorstehenden Ansprüche,
**dadurch gekennzeichnet, dass**
das Gateway (10) über das HART-Protokoll mit dem mindestens einen Feldgerät (14) kommuniziert.

9. Gateway nach einem der vorstehenden Ansprüche,
**dadurch gekennzeichnet, dass**
die übergeordnete Einheit (12) mit dem Gateway (10) über ein Funknetz verbunden ist.

10. Gateway nach einem der vorstehenden Ansprüche,
**dadurch gekennzeichnet, dass**
dieses eine optische Anzeige (26) zur Visualisierung des Betriebszustandes aufweist.

11. Verfahren zur Inbetriebnahme eines Gateways (10), wobei das Gateway (10) der Kommunikation zwischen mindestens einem Feldgerät (14) mit einer übergeordneten Einheit (10) dient, wobei durch ein Auslöseereignis eine automatische Erkennung mindestens eines Feldgerätes (14) und eine anschließende Parametrierung des Feldgerätes (14) im Gateway (10) erfolgt.

12. Verfahren nach einem der vorstehenden Ansprüche,
**dadurch gekennzeichnet, dass**
es sich bei dem Auslöseereignis um eine Aktivierung eines Auslöseelementes (24) handelt.

13. Verfahren nach einem der vorstehenden Ansprüche,
**dadurch gekennzeichnet, dass**
zur Erkennung der vorhandenen Feldgeräte (14) HART-Adressen in einem vorgegebenen Adressbereich durchsucht werden.

14. Verfahren nach einem der vorstehenden Ansprüche,
**dadurch gekennzeichnet, dass**
konfiguriert wird, nach welchem Zeitintervall jeweils ein Abrufen eines Messwertes von einem Feldgerät (14) und/oder eine Weiterleitung eines Messwertes an die übergeordnete Einheit (12) erfolgen soll.

15. Verfahren nach dem vorstehenden Anspruch,
**dadurch gekennzeichnet, dass**
das Zeitintervall abhängig von einer Art der Energieversorgung festgelegt wird.

16. Verfahren nach einem der vorstehenden Ansprüche,
**dadurch gekennzeichnet, dass**
eine Weiterleitung des Messwertes an die übergeordnete Einheit (12) in Abhängigkeit einer Messwertänderung erfolgt.

17. Computerprogrammprodukt, das wenn es auf einem Prozessor ausgeführt
wird, diesen dazu veranlasst ein Gateway (10) gemäß einem Verfahren gemäß einem der Patentansprüche 11 bis 16 anzusteuern.
